# EUROPÄISCHE PATENTANMELDUNG

(11) **EP 2 299 384 A1**
(43) Veröffentlichungstag der Anmeldung: **23.03.2011**
(21) Anmeldenummer: 09011968.6
(22) Anmeldetag: 19.09.2009
(51) Int. Cl.: G06K 9/00

(54) **Verfahren und Gerät zur Identifizierung / Authentifizierung eines Nutzers**

(71) Anmelder: Deutsche Telekom AG, 53113 Bonn (DE)
(72) Erfinder: Trinkel, Marian, 52372 Kreuzau OT Untermaubach (DE)

(57) **Zusammenfassung**

Die Erfindung betrifft ein Verfahren zur Identifizierung / Authentifizierung eines Nutzers an einem Gerät, insbesondere zum Zweck der Freischaltung des Gerätes zur Benutzung, wobei bei einem Kontakt zwischen einem Körperteil / Körperbereich des Nutzers und dem Gerät mittels wenigstens einem von mehreren über das Gehäuse (1) des Gerätes verteilt angeordneten Sensoren (3) wenigstens ein biometrisches Merkmal des Nutzers erfasst und/oder genutzt wird. die Erfindung betrifft weiterhin ein Gerät, insbesondere Kommunikationsgerät, mit einer Vorrichtung zur Freischaltung des Gerätes zur Benutzung durch einen Nutzer, wobei die Vorrichtung mehrere Sensoren (3) umfasst, die über das Gehäuse (1) des Gerätes verteilt angeordnet sind, wobei die Vorrichtung eingerichtet ist, bei einem Kontakt zwischen einem Körperteil / Körperbereich des Nutzers mit dem Gerät mittels wenigstens einem der Sensoren (3) wenigstens ein biometrisches Merkmal des Nutzers zur Freischaltung zu erfassen und/oder zu nutzen. Die Erfindung betrifft auch ein Verfahren zur Herstellung eines solchen Gerätes.

## Beschreibung

Die Erfindung betrifft ein Verfahren zur Identifizierung / Authentifizierung eines Nutzers an einem Gerät, insbesondere zum Zweck der Freischaltung des Gerätes zur Benutzung. Die Erfindung betrifft weiterhin ein Gerät, insbesondere ein Kommunikationsgerät, mit einer Vorrichtung zur Freischaltung des Gerätes zur Benutzung durch einen Nutzer sowie auch ein Verfahren zur Herstellung eines solchen Geräts.

Im Stand der Technik ist es bekannt, das Geräte von einer Benutzung durch einen Benutzer freigeschaltet werden müssen, damit die Benutzung stattfinden kann. Beispielsweise ist es dafür bekannt ein Gerät, wie z.B. einen Computer mit einen Fingerabdruck-Scanner zu versehen. Beim Starten des Computers wird sodann der Benutzer zunächst aufgefordert seinen Fingerabdruck einlesen zu lassen, wonach eine Überprüfung mit den in einer Datenbank abgespeicherten Fingerabdruck-Daten erfolgt. Ist diese Prüfung positiv, ist also der Nutzer identifiziert bzw. authentifiziert, so kann der Nutzer den Computer benutzen, ansonsten kann er es nicht.

Solche Fingerabdruck-Scanner werden dabei häufig als separate Einheit zu Computern angeboten, es gibt jedoch auch Computer, gerade auf dem Gebiet der Notebooks / Laptops, die einen eingebauten Fingerabdruck-Scanner aufweisen. Auch andere Geräte als Computer werden heute bereits mit solchen Fingerabdruck-Scanner versehen.

Bei einer solchen Methode der Identifizierung / Authentifizierung wird es als nachteilig empfunden, dass durch den Scanner genau die Identifizierungsprozedur vorgegeben wird, d.h. der Nutzer muss seinen einen bestimmten und vorher erfassten Finger auf genau die vorgegebene Lesestelle des Fingerabdruck-Scanners positionieren, um dem Fingerabdruck einlesen lassen zu können. Dies setzt eine bewusste ldentifizierungs- / Authentifizierungsprozedur voraus und damit eine konkrete Anmeldetätigkeit am Gerät.

Darüber hinaus ist ein einmal so frei geschaltetes Gerät benutzbar, bis dass sich der Nutzer an dem Gerät konkret abmeldet oder das Gerät ausschaltet. Ein solches Gerät kann daher auch durch Dritte, ggfs. nicht berechtigte Personen genutzt werden, wenn der berechtigte Benutzer das Gerät freigeschaltet hat und z.B. unbeaufsichtigt lässt.

Aufgabe der Erfindung ist es, ein Verfahren und ein Gerät, sowie ein Verfahren zur Herstellung eines solchen Gerätes bereitzustellen, mit dem die genannten Nachteile überwunden werden. Insbesondere soll die Möglichkeit gegeben werden, eine automatische Identifizierung / Authentifizierung durchzuführen, wenn der Nutzer das Gerät in die Benutzung nimmt, ohne einen konkreten bewussten Anmeldevorgang vornehmen zu müssen. Bevorzugt ist es auch die Aufgabe der Erfindung, die Berechtigung des Nutzers fortwährend bei der Benutzung zu Prüfen.

Erfindungsgemäß wird dies Aufgabe gelöst durch eine genanntes gattungsgemäßes Verfahren, bei dem bei einem Kontakt zwischen einem Körperteil / Körperbereich des Nutzers und dem Gerät mittels wenigstens einem von mehreren über das Gehäuse des Gerätes verteilt angeordneten Sensoren wenigstens ein biometrisches Merkmal des Nutzers erfasst und/oder genutzt wird.

Weiterhin wird die Aufgabe gelöst durch ein Gerät der eingangs genannten gattungsgemäßen Art, bei dem die Vorrichtung zur Freischaltung mehrere Sensoren umfasst, die über das Gehäuse des Gerätes verteilt angeordnet sind, wobei die Vorrichtung eingerichtet ist, bei einem Kontakt zwischen einem Körperteil / Körperbereich des Nutzers mit dem Gerät mittels wenigstens einem der Sensoren wenigstens ein biometrisches Merkmal des Nutzers zur Freischaltung zu erfassen und/oder zu nutzen.

Einer der Kerngedanken der Erfindung ist es, dass statt nur einem der üblichen Sensoren, wie z.B. einen eingangs genannten Fingerabdruck-Scanner nunmehr erfindungsgemäß mehrere, insbesondere wenigstens zwei und bevorzugt eine Vielzahl von Sensoren verwendet werden, die verteilt über das Gehäuse des Gerätes angeordnet sind.

Dies führt zu dem erfindungsgemäßen Vorteil, dass ein Nutzer nun nicht mehr genötigt ist, einen bewussten und konkreten Anmeldevorgang für die Benutzung des Gerätes durchzuführen, bei dem der Nutzer identifiziert / authentifiziert wird. Aufgrund der wenigstens zwei, bevorzugt der Vielzahl der verteilt angeordneten Sensoren besteht eine große Wahrscheinlichkeit, dass schon alleine durch die normale Tätigkeit einer Benutzungsaufnahme wenigstens einer der Sensoren, bevorzugt gleichzeitig mehrere der Sensoren durch den Nutzer kontaktiert wird und so durch den wenigstens einen kontaktierten Sensor ein biometrisches Merkmal des Nutzer erfasst oder genutzt werden kann.

Der Erfindung liegt dabei der Gedanke zugrunde, dass bei einer üblichen Benutzung eines Gerätes durch einen Nutzer ein Kontakt entsteht zwischen dem benutzten Gerät und einem Körperteil bzw. Körperbereich des Nutzers. Dieser quasi automatisch bei der Benutzung entstehende Kontakt kann dann zur Freischaltung des Gerätes verwendet werden, d.h. der bewusste Anmeldevorgang des Nutzers am Gerät entfällt.

Beispielsweise nimmt ein Nutzer zur Benutzung ein Mobiltelefon in die Hand, wobei häufig 4 Finger einer Hand an einer Seitenfläche des Mobiltelefons positioniert sind, der Daumen an der gegenüberliegenden Seitenfläche und die Handinnenfläche die Rückseite des Mobiltelefon kontaktiert. Ähnliches gilt auch für andere Geräte, z-B. Notebooks, bei denen üblicherweise die Handballen auf dem Bereich unter der Tastatur aufliegen und die Fingerkuppen die Tastenoberflächen berühren.

Im Sinne der Erfindung zählen zu dem Gehäuse bzw. zur Gehäuseoberfläche alle Bereiche eines Gerätes, die das Gerät nach außen hin abschließen, also auch Anzeigeeinheiten, Ausgabeeinheiten und Eingabeeinheiten, insbesondere also auch Displays, Tasten, Lautsprecherabdeckungen, Mikrophonabdeckungen etc. Es kann also vorgesehen sein, erfindungsgemäß Sensoren nicht nur in passive Gehäusebereichen vorzusehen, sondern auch in aktiven, d.h. solchen die in Interaktion mit dem Benutzer stehen, wie z.B. Ein-/Ausgabeeinheiten, insbesondere Displays und Tastaturen etc.

Bevorzugt kann es dabei vorgesehen sein, dass die Sensoren in den Bereichen des Gehäuses eines Gerätes angeordnet sind, in denen ein normaler Durchschnittsbenutzer mit einem Körperbereich / Körperteil das Gerät bei normaler durchschnittlicher Benutzung kontaktiert. Dabei kann jeder der Sensoren einen anderen Körperteil oder Körperbereich zugeordnet sein. Es kann auch sein, dass ein bestimmter Körperteil / Körperbereich durch mehrere Sensoren oder Teilsensoren eines Sensors erfasst wird.

Der Erfindung können somit auch ergonomische / ergonometrische Informationen zugrunde liegen, nach denen die Positionierung der Sensoren verteilt über das Gehäuse erfolgt. Mit Bezug auf vorgenanntes Mobiltelefon können also z.B. vier Fingersensoren in einer Gehäuseseitenfläche positioniert sein und/oder ein Fingersensor in der gegenüberliegenden Seitenfläche und/oder ein Sensor in der Rückfläche. Vergleichbares gilt für andere Gerätearten / -typen.

Die Sensoren können in einer Ausführung beispielsweise in die Oberfläche des Gehäuses eingebettet sein. In einer anderen Ausführung besteht auch die Möglichkeit, dass die Sensoren oberflächennah unter der Gehäuseoberfläche angeordnet sind. Dies hat den Vorteil, dass die Sensoren selbst nicht sichtbar sind. Gerade bei einer solchen Ausführung, jedoch auch bei allen anderen Ausführungen kann es vorgesehen sein, dass das Material des Gehäuses einen Teil eines Sensors bildet. Z.B. kann bei kapazitiv arbeitenden Sensoren das Gehäusematerial ein Dielektrikum bilden. Bei elektrisch kontaktierenden Sensoren, insofern also im Wesentlichen bei Sensoren, die als Elektroden ausgeführt sind, kann der elektrische Kontakt über das Gehäusematerial geschlossen werden.

Bei den Ausführungen, bei welchen das Material des Gehäuses einen Teil eines Sensors ausmacht, kann das Gehäusematerial sensorspezifische Materialzumischungen aufweisen, z.B. leitfähige Partikel, Nanopartikel mit gewünschten Eigenschaften oder ähnliches.

In einer möglichen insbesondere konstruktiv einfachen Ausführung kann z.B. jede Gehäuseseite wenigstens einen Sensor umfassen. In einer anderen Ausführung können zumindest einige, bevorzugt alle Gehäusekanten wenigstens einen Sensor umfassen. In einer wieder anderen Ausführung kann das Gehäuse bezogen auf seine Gehäuseoberfläche zumindest überwiegend, insbesondere zu mehr als 50 % Sensoren aufweisen. Ggfs. kann das Gehäuse vollständig einen oder eine Vielzahl von Sensoren ausbilden.

Insbesondere bei dieser Ausführung, jedoch auch bei allen anderen kann es vorgesehen sein, dass jeder Sensor in eine Vielzahl von Teilsensoren unterteilt ist. Dabei können z.B. verschiedene Sensoren unterschiedliche biometrische Merkmale erfassen bzw. nutzen, wobei alle Teilsensoren dasselbe biometrische Merkmal erfassen oder nutzen. So kann z.B. innerhalb eines Sensors noch eine Ortsauflösung des biometrischen Merkmals erfolgen.

Unter einem biometrischen Merkmal wird im Rahmen dieser Erfindung jegliches Merkmal verstanden, dass durch den Körper oder einen Körperteil / Körperbereich des Nutzers vorgegeben wird. Es handelt sich dabei nicht nur um Merkmale zu Körperformen, sondern insbesondere auch um elektrische Eigenschaften des Körpers / Körperbereichs / Körperteils wie z.B. der elektrische Widerstand, die elektrische Induktivität oder Kapazität. Z.B. kann durch zwei Sensoren eine solche elektrische Größe zwischen zwei Körperteilen / Körperbereichen, z.B. zwischen zwei Fingern, erfasst oder genutzt werden.

Im Rahmen des erfindungsgemäßen Verfahren kann es z.B. vorgesehen sein, dass bei einem körperlichen Kontakt zwischen Gerät und Körperteil des Nutzers eine Information, insbesondere ein Kontaktprofil erfasst wird, welche/s repräsentiert, welche der Sensoren oder Teilsensoren der Sensoren kontaktiert sind, wobei diese Information mit einer gespeicherten Information verglichen wird. Der Kontakt zwischen den Sensoren / Teilsensoren und Körperteilen / Körperbereich kann z.B. durch Erfassung elektrischer Messgrößen - wie zuvor beschrieben - festgestellt werden.

Es besteht so in einer Ausführung die Möglichkeit, ein für einen Nutzer typisches Kontaktprofil, also im Wesentlichen eine Information darüber, wie der Nutzer ein Gerät kontaktiert, z.B. sein Mobiltelefon anfasst, abzuspeichern und bei zukünftiger Benutzung mit dem dann konkreten aktuellen Kontaktprofil bei der beabsichtigten Benutzung zu vergleichen. Bei einer Übereinstimmung kann dann das Gerät zur Nutzung freigeschaltet werden oder es wird die Nutzung verweigert, wenn der Vergleich negativ ausläuft.

Bei einem Kontakt zwischen Gerät und einem Körperteil / Körperbereich des Nutzer kann es nicht nur vorgesehen sein, dass hierdurch Sensoren betätigt werden oder Sensoren biometrische Merkmale erfassen, sondern auch, dass durch die Sensoren oder eine im Gerät vorhandene Elektronik, welche die Sensoren verwendet wenigstens ein biometrisches Merkmal des kontaktierenden Körperteil / Körperbereichs genutzt wird.

Eine solche Nutzung kann derart erfolgen, dass durch den Kontakt ein Körperteil / Körperbereich einen Teil ausbildet einer in dem Gerät ausgebildeten Elektronik, insbesondere durch Bereitstellung wenigstens einer elektrischen Größe, insbesondere Widerstand, Induktivität, Kapazität, Dielektrizität, insbesondere wobei die Funktion und/oder ein Abgleich der Elektronik in Abhängigkeit des kontaktierten Körperbereiches / Körperteils geprüft wird.

Somit wird der Körper des Nutzers zumindest bereichsweise in die Elektronik zur Freigabe der Nutzung bzw. Identifizierung / Authentifizierung integriert. Z.B. kann ein Körperteil / Körperbereich einen Widerstand bereitstellen und/oder eine Kapazität und/oder Induktivität oder jegliche andere elektrische Größe.

In einer möglichen Anwendung kann z.B. durch mehrere Sensoren und in der Geräteelektronik vorhandene Elektronikbauteile (z.B. Widerstande) zusammen mit den Widerständen zwischen Sensoren, die durch Körperkontakt bereitgestellt werden eine Wheatstonesche Brücke realisiert werden, die z.B. automatisch abgeglichen werden kann. Benutzt ein anderer Nutzer, als derjenige auf den abgeglichen wurde, das Gerät, so liegt kein Abgleich vor und das Gerät ist unbenutzbar.

Hier besteht ebenso die Möglichkeit einen Abgleich einer internen Elektronik mit durch Körperkontakt von außen bereitgestellten elektrischen Größen hinsichtlich jeglichen gewünschten Kriteriums durchzuführen und diesen Abgleich später zur Freischaltung zu nutzen.

Gemäß der Erfindung besteht auch die Möglichkeit, die Erfassung / Nutzung des biometrischen Merkmales kontinuierlich vorzunehmen, solange der Kontakt besteht. Z.B. kann das Gerät nur so lange benutzbar sein, wie der Körperkontakt zischen Nutzer und Gerät gegeben ist. Ein Mobiltelefon kann z.B. nur dann zum Telefonieren benutzt werden, wenn der berechtigte Benutzer des Mobiltelefon in Händen hält, nicht jedoch eine andere Person.

Die Sensoren des Gerätes können in einer Ausführung auch biometrische Merkmale einlesen und Daten, welche die gelesenen Merkmale repräsentieren, einer Auswertung zuführen in Abhängigkeit von der die Freischaltung bzw. Identifizierung / Authentifizierung erfolgt.

Auch können die Sensoren durch einen Kontakt in der Oberflächenform änderbar sein und eine z.B. elektronisch repräsentierte Information über die Oberflächenform bei einem Kontakt erfassen, die dann mit einer gespeicherten Information verglichen wird. Durch die Änderung der Oberflächenform kann z.B. die Kapazität eines Sensors geändert, was sodann festgestellt wird.

Sensoren können auch funktionale Nano-Beschichtungen, z.B. Nano-Röhrchen aufweisen, wobei sich durch einen Kontakt die Konfiguration einer solchen Beschichtung ändern kann, was zu einem geänderten Meßwert eines solchen Sensors führt.

Als weiterhin bevorzugt wird es angesehen, wenn das Gerät eine äußere Gehäuseform aufweist, die zumindest in Teilbereichen dem Formabdruck von einem Körperteil / Körperbereich eines Nutzers, insbesondere von dessen Hand, Fingern oder Kopf entspricht oder diesen zumindest im Wesentlichen nachbildet, wobei mehrere Sensoren verteilt über das Gehäuse des Gerätes in die dem Formabdruck entsprechenden oder nachgebildeten Gehäusebereiche integriert sind.

Ein solches Gerät kann z.B. hergestellt werden, indem von einem Körperteil / Körperbereich eines Nutzer, insbesondere von dessen Hand, Fingern oder Kopf ein Formabdruck genommen wird und in Abhängigkeit des erstellten Formabdruckes die äußere Form des Gehäuses des Gerätes so hergestellt wird, dass die Gehäuseform zumindest in Teilbereichen dem Formabdruck entspricht oder diesen zumindest im Wesentlichen nachbildet, wobei mehrere Sensoren verteilt über das Gehäuse des Gerätes in die dem Formabdruck entsprechenden / nachbildenden Gehäusebereiche integriert werden.

Bei einer solchen Ausführung wird es als vorteilhaft angesehen, dass durch die Anpassung der äußeren Gehäuseform an den Körper des Nutzers bzw. an ein Körperteil / Körperbereich bei einer Benutzung des Gerätes quasi automatisch der Kontakt an dafür vorgesehenen Stellen entsteht, da der Nutzer automatisch einen bequemen und angenehmen Kontakt suchen wird, der durch die Anpassung erzielt wird.

Z.B. können in Abhängigkeit der tatsächlichen Handform an einem Mobiltelefon daran angepasste Fingermulden geformt sein, in welche sodann die Sensoren integriert sind. Bei einer Benutzung wird der Nutzer automatisch seine Finger in die an ihn angepassten Mulden legen. Es besteht somit eine hohe Wahrscheinlichkeit, dass alle in diesen formangepassten Bereichen vorgesehenen Sensoren auch tatsächlich kontaktiert werden, wenn der Nutzer das Gerät in die Nutzung nimmt.

Bei allen Ausführungsformen kann es auch vorgesehen sein, dass die Sensoren an den Nutzer bei einem Kontakt zwischen Gerät bzw. dessen Gehäuse und einem Körperteil / Körperbereich eine Rückmeldung an den Nutzer geben, z.B. eine akustische, optische, thermische oder auch haptische.

Eine solche Rückmeldung kann z.B. erfolgen, wenn der betreffende Sensor eine Übereinstimmung oder alternativ eine Abweichung von einem gespeicherten biometrischen Merkmal feststellt.

Unter einem Sensor wird im Rahmen der Erfindung ein System zur Erfassung von Daten / Informationen, insbesondere biometrischer Art verstanden, beispielsweise ein multimodales Erfassungssystem und/oder eine multimodale Mensch-Maschine Schnittstelle, insbesondere wobei mit dem System eine Eingabe und/oder Ausgabe von Daten und/oder Informationen erfolgen kann. Beispielhaft für einen Sensor mit Eingabefunktion ist ein Scanner, wie bei einem Fingererkennungssystem (Fingerscanner),.

Ein Sensor kann beispielsweise auch wenigstens eine Kamera für eine 2-dimensionale Darstellung oder wenigstens zwei Kameras für eine 3-dimensionale Darstellung umfassen. Eine oder mehrere Kameras können den Sensor alleinig ausbilden oder zusätzlich zu einer anderen Sensorfunktion vorhanden sein.

Beispielhaft kann eine Handykamera zum Einsatz kommen, wobei die Kamera in einer möglichen Ausführung in Höhe und Richtung des Lautsprechers platziert sein kann, so dass eine optische Aufnahme (2-dimensional, 3-dimensional) der hörenden Ohrmuschel des Nutzers erfolgen kann. So kann beispielhaft der Sensor / die Kamera kurz vor Aufnahme eines Gespräches oder nach einer Triggerung, die Ohrmuschel des möglichen Nutzers aufnehmen, fotografieren, scannen und diese mit einem gespeicherten Benutzerschema, wie einem Vergleichsbild in einem Speicher, Datenbank, Datenspeicher im Gerät und/oder über eine im und/oder am Netzwerk, Privates Netzwerk, Internet, Mobilfunknetz, Fixnetz liegende Datenbank - vergleichen.

Dabei kann die dann ausgelöste Funktionalität (Freischaltung) nicht nur ein Sperren oder Entsperren sein, sondern auch weitere benutzerabhängige Funktionalitäten auslösen, wie zum Beispiel, dass die Lautstärke bei dem Nutzer A (schwerhörig) erhöht wird und bei der Nutzung des Systems durch Nutzer B (Normal) das Gerät die Lautstärke nach vorgaben erniedrigt wird.

Weitere Sensoren zur Eingabe können z.B. sein: mindestens ein Mikrofon, mindestens ein Temperaturfühler, DNA-Analyseeinheiten.

Beispielhaft für einen Sensor mit Ausgabefunktionalität sind: Displays, Lautsprecher, mechanische Schwingungserzeuger, Vibrationssysteme. Z.B. kann ein mechanischer Schwingungserzeuger unterschiedliche Frequenzen ausgeben, insbesondere je nach Triggerung durch mindestens ein weiteres System z.B. zur Ausgabe (Anzeigen der Information) und/oder Signalisierung (ankommender Ruf) und/oder Übermittlung (abgehender Ruf) einer normalen Nachricht (z.B. leichtes Surren) und zur Ausgabe und/oder Signalisierung und/oder Übermittlung einer wichtigen, sehr dringenden Nachricht, z.B. durch eine schnelle, intensive Vibration. Eine solche Funktion kann z.B. auch bei einem Fingerscanner erfolgen. Ein solches Ausgabesystem kann in seiner Sensorfunktion auch zur Eingabe genutzt werden, z.B. kann die Fingerscanfläche auch als Ausgabemedium z.B. Displayfunktionalität verwendet werden.

Beispielhaft für einen Sensor zur Eingabe/Ausgabe ist ein Scanner, ein Fingererkennungssystem (Fingerscanner), in dem ein weiteres Sensorsystem z.B. ein mechanischer Schwingungserzeuger integriert und/der gekoppelt, kombiniert (Sandwich, Huckepack, angeflanscht) ist.

Bevorzugt kann es vorgesehen sein, mittels eingesetzter Sensoren der erfindungsgemäßen Art auch menschliche Emotionen zu erfassen, die z.B. aus übertragenen biometrischen Merkmalen erkannt, verarbeitet und signalisiert werden. Z.B. kann so mit einem emotionalen Zustand, z.B. einer Erregung, eine mögliche Erkrankung des Nutzers erkannt werden z.B. durch einen schnellen Herzschlag der beispielsweise über das Fingerscannersystem erkannt wird, z.B. technisch derart, das der Fingerscanner die Blutgefäße des Nutzers erfasst und aufgrund der Bewegungen in den Blutgefäßen und/oder der Bewegung der Blutgefäße die Zeit und/oder den Rhythmus erfasst, misst, verarbeitet und hieraus den Herzschlag pro Minute ermittelt. Dabei kann das Ergebnis der Ermittlung z.B. anhand der Farbe der Scanfläche visualisiert und/oder weiterleitet werden z.B. die ermittelte Information über ein Netzwerk an eine zentrale/dezentrale Datenbank gesendet und/oder die Information als ein weiteres biometrisches Merkmal in einer Datenbank als Muster, Historie, Templates gespeichert, verarbeitet, insbesondere mit Vergleichdaten verglichen werden.

Durch die erfinderische Lösung können z.B. bei der Verifikation des Kunden für einen Bezahlvorgang an der Kasse, medizinische Daten erfasst, verarbeitet und/oder zentral/dezentral gespeichert und/oder weitere medizinische Aktionen auslösen, z.B. einen personalisierten Anruf, Mail mit einer Aufforderung zu einem Arztbesuch, mit einer Terminierung, Arztauswahl die sich nach der Schwere der Krankheit (ermittelt z.B. aus der Historie der bereits zuvor erfassten Daten, z.B. Herzschlagdaten) richtet.

Auch kann der Sensor ein Funktion beinhalten, zur Unterstützung einer multisensorischen Wahrnehmung, so das beispielhaft mehrere menschliche Sinne gleichzeitig stimuliert werden. So können z.B. akustische und visuelle Signale technisch gleichzeitig ausgegeben werden, eintreffen und verarbeitet werden. Dabei kann der Sensor selbst Reize die unter der Wahrnehmungsschwelle liegen, z.B. extrem leiser Ton, Vibration, taktiler Reiz, sehr schwacher Lichtblitz, erzeugen und gleichzeitig ausgeben, z.B. senden.

Hierdurch können beim Menschen Synergien zwischen Hören und Sehen unterstützt werden, bis zur multimodalen Verstärkung, die auch zu kürzeren Reaktionszeiten führen. Somit können auch wichtige technische Signalisierungen, eine technische Kennzeichnung von besonderen Informationen, Daten, dadurch geschehen, das über unterschiedliche Sensoren, gleichzeitig an unterschiedliche menschliche Sinne (z.B. Auge, Ohr, taktiler Reiz) Signale (Lichtblitze, Farben, Töne, Vibration) gesendet werden.

Beispielhaft kann sich bei einem Fingerscanner bei einer positiven/negativen Verifikation oder Nutzung z.B. die Oberfläche erwärmen/abkühlen, z.B. hier technisch mittels eines Peltier-Elements und/oder die Oberfläche des Fingerscanner kann haptische Eigenschaften annehmen (z.B. weich, angenehm), z.B. hier technisch gelöst mittels einer elektrischen Strom-, und/oder Spannungsänderung an einer Nanobeschichtung der Scanneroberfläche, wodurch die Nanopartikel verändert werden und einen andere haptische Eigenschaft ergeben z.B. durch Aufrichten, Senken der Nanopartikel, je nach durchgeführter Änderung.

Auch kann eine Farbänderung der Scanneroberfläche erfolgen, z.B. hier technisch mittels einer elektrischen Strom-, und/oder Spannungsänderung, die auf ein System wirkt und einen andere optische Eigenschaft ergibt, z.B. durch Aufrichten, Senken der Nanopartikel und Erzielung eines variablen Brechungsindex je nach Spannungsgröße.

Somit ist der Sensor, hier z.B. der Fingerscanner, gleichzeitig auch ein Display, technisch dadurch gelöst, das von mindestens einem Rand der Scanneroberfläche mindestens ein Leuchtmittel (z.B. LED, blau, rot, gelb usw) Lichtenergie vom Rand zuführt und somit die Oberfläche beleuchtet.

Zur Verbesserung der Leuchteigenschaft der Oberfläche können in und/oder auf/unter das Glas eines Displays Spiegel, Spiegelpartikel, Nano-Röhren integriert, belegt, beschichtet werden, die eine Verbesserung der Lichtstreuung bewirken aber gleichzeitig eine optische Durchlässigkeit für das Fingerbild ermöglichen.

In einer besonderen Ausführungsform kann eine erste Oberfläche einen anderen Brechungsindex und/oder Materialkonstante haben, als eine zweite Oberfläche, so das das Licht unterschiedlich schnell im Material der Oberfläche verläuft. So kann z.B. ein Transport des Lichtes erfolgen in zueinander senkrechten Richtungen mit unterschiedlichen Brechungsindizes in diesen Richtungen.

Mittels der hier erfinderisch eingesetzten Sensoren ist eine multisensorische Interaktion möglich ebenso wie auch der Einsatz für autonome Robotersysteme.

Unter biometrischen Merkmalen werden auch statische Parameter (z.B. ein Bild, ein Messwert) und dynamische Parameter (z.B. eine Bildfolge pro Zeit, Bildfolge pro Ereignis, Bildfolge pro emotionalem Ereignis des Nutzers, Rhythmus von Bildern) verstanden.

Weiter wird unter einem biometrischen Merkmal optische Merkmale verstanden, wie das Aussehen von Körperteilen / Körperbereichen wie z.B. Finger, Venenstruktur, Hörmuschen, Gesicht, Hautoberfläche, Hautoberflächenräume, (Tiefenstruktur der Hautrille), Hautfärbung, Venen, und auch veränderbare Zustände z.B. Venenrhythmus verstanden.

Ebenso werden darunter auch chemische, biochemische Merkmale verstanden wie z.B. Scheiß, Geruch, DNA / DNS, Blutzucker, etc. Ebenso werden darunter auch elektrotechnische Merkmale verstanden wie z.B. Hautwiderstand, Hautkapazitäten, Hautinduktionen, Hautrillenabstände, aber auch z.B. Geschwindigkeiten, wie Blutflussgeschwindigkeiten.

In einer besonderen Ausführungsform kann der Sensor bzw. eine damit verbundene Elektronik einen Abgleich zwischen Finger und/oder Hörmuschelbild vornehmen. Dies kann auch 3-dimensional erfolgen, mittels einer 3-D Kamera, z.B. realisiert durch zwei Kameras in einem definierten Abstand zueinander.

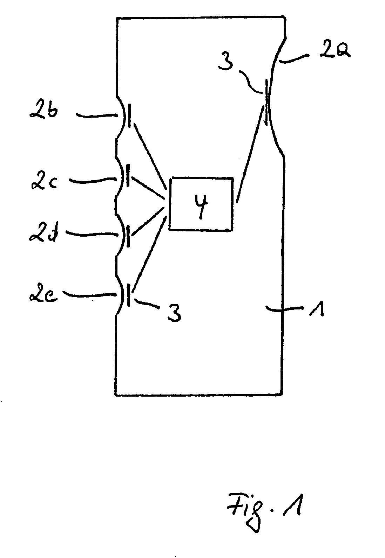

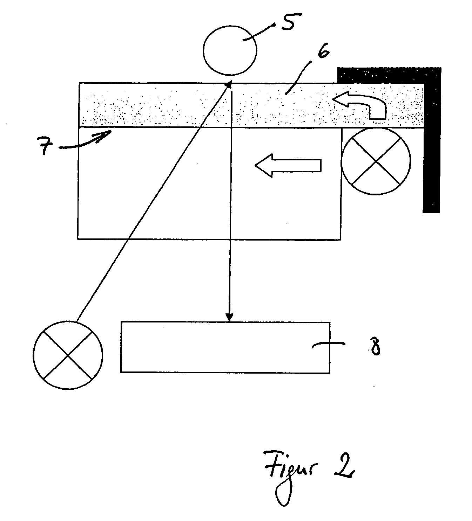

Ein Ausführungsbeispiel der Erfindung ist in Figur 1 näher erläutert. Figur 2 zeigt einen möglichen Fingersensor.

Die Figur 1 zeigt schematisch die äußere Form eines Gehäuses 1, z.B. eines Mobiltelefons. An der linken Gehäuseseite sind 4 Fingermulden 2b, 2c, 2d und 2e angeordnet, die z.B. gemäß einer Handabformung hergestellt sind. Rechtseitig ist eine für den Daumen vorgesehene Mulde 2a angeordnet. In jeder Mulde ist hier als Beispiel ein Sensor 3 angeordnet, der mit einer internen Elektronik 4 verbunden ist.

Diese Elektronik erhält von den Sensoren z.B. Messdaten und kann diese auswerten, z.B. durch Vergleich mit vorgegebenen Vergleichsdaten. Auch kann durch die Sensoren 3 der Körper einer Person in die Elektronik integriert werden.

Z.B. kann mit jedem Sensor der Hautwiderstand oder Körperwiderstand ebenso wie andere elektrische Größen (Kapazität, Induktivität) entweder erfasst werden oder konkret in die Elektronik integriert werden. Z.B. kann die Elektronik 4 einen Messstrom zwischen Damen und einem anderen Finger erzeugen oder die Widerstände zwischen den Sensoren, die durch den kontaktierenden Körper gegeben sind in einer elektronischen Abgleichsschaltung verwenden, z.B. einer Wheatstoneschen Messbrücke.

Deutlich wird hier in jedem Fall, dass statt nur einem Sensor mehrere Sensoren zur Verfügung stehen, wobei durch die Konturierung des Gehäuses anhand einer ergonomischen Handform eine hohe Wahrscheinlichkeit gegeben ist, dass zumindest einer der Sensoren kontaktiert wird und so ein biometrisches Merkmal erfassen oder nutzen kann, um die Freigabe zur Nutzung zu bewirken.

Die Figur 2 zeigt einen beispielhaften Sensor als Eingabe- und Ausgabesystem - hier einen Fingerscanner. Dargestellt sind ein Finger 5, eine Streulichtabdeckung 6, eine 1.-te Oberfläche 7 z.B. mit Nanobeschichtung und/oder unterschiedlichem Brechungsindex und/oder polarisiertem Glas, LEDs, z.B. rot u. grün u. blau und/oder Peltierelement, sowie eine 2.-te Oberfläche 8, z.B. die Erfassungsoberfläche z.B. umfassend Glas und/oder Licht zum Scannen und/oder CCD Chip.

## Patentansprüche

1. Verfahren zur Identifizierung / Authentifizierung eines Nutzers an einem Gerät, insbesondere zum Zweck der Freischaltung des Gerätes zur Benutzung, **dadurch gekennzeichnet, dass** bei einem Kontakt zwischen einem Körperteil / Körperbereich des Nutzers und dem Gerät mittels wenigstens einem von mehreren über das Gehäuse (1) des Gerätes verteilt angeordneten Sensoren (3) wenigstens ein biometrisches Merkmal des Nutzers erfasst und/oder genutzt wird.

2. Verfahren nach einem der vorherigen Ansprüche, **dadurch gekennzeichnet, dass** die Erfassung / Nutzung des biometrischen Merkmales kontinuierlich erfolgt, solange der Kontakt besteht.

3. Verfahren nach einem der vorherigen Ansprüche, **dadurch gekennzeichnet, dass** das bei einem Kontakt eine Information, insbesondere ein Kontaktprofil erfasst wird, welche/s repräsentiert, welche der Sensoren (3) oder Teilsensoren der Sensoren (3) kontaktiert sind, wobei diese Information mit einer gespeicherten Information verglichen wird.

4. Verfahren nach einem der vorherigen Ansprüche, **dadurch gekennzeichnet, dass** durch den Kontakt ein Körperteil / Körperbereich einen Teil ausbildet einer in dem Gerät ausgebildeten Elektronik (4), insbesondere durch Bereitstellung wenigstens einer elektrischen Größe, insbesondere Widerstand, Induktivität, Kapazität, Dielektrizität, insbesondere wobei die Funktion und/oder ein Abgleich der Elektronik in Abhängigkeit des kontaktierten Körperbereiches / Körperteils geprüft wird.

5. Verfahren nach einem der vorherigen Ansprüche, **dadurch gekennzeichnet, dass** das die Sensoren (3) durch einen Kontakt in der Oberflächenform änderbar sind und eine elektronisch repräsentierte Information über die Oberflächenform bei einem Kontakt erfasst und mit einer gespeicherten Information verglichen wird.

6. Gerät, insbesondere Kommunikationsgerät, mit einer Vorrichtung zur Freischaltung des Gerätes zur Benutzung durch einen Nutzer, **dadurch gekennzeichnet, dass** die Vorrichtung mehrere Sensoren (3) umfasst, die über das Gehäuse (1) des Gerätes verteilt angeordnet sind, wobei die Vorrichtung eingerichtet ist, bei einem Kontakt zwischen einem Körperteil / Körperbereich des Nutzers mit dem Gerät mittels wenigstens einem der Sensoren (3) wenigstens ein biometrisches Merkmal des Nutzers zur Freischaltung zu erfassen und/oder zu nutzen.

7. Gerät nach Anspruch 6, **dadurch gekennzeichnet, dass** die Sensoren (3) oberflächennah unter der Gehäuseoberfläche angeordnet sind.

8. Gerät nach einem der vorherigen Ansprüche, **dadurch gekennzeichnet, dass** das Material des Gehäuses (1) einen Teil eines Sensors (3) bildet.

9. Gerät nach einem der vorherigen Ansprüche, **dadurch gekennzeichnet, dass** das Gehäuse (1) bezogen auf seine Gehäuseoberfläche zumindest überwiegend, insbesondere zu mehr als 50 % Sensoren aufweist.

10. Gerät nach einem der vorherigen Ansprüche, **dadurch gekennzeichnet, dass** jede Gehäuseseite wenigstens einen Sensor (3) umfasst.

11. Gerät nach einem der vorherigen Ansprüche, **dadurch gekennzeichnet, dass** zumindest einige, bevorzugt alle Gehäusekanten wenigstens einen Sensor (3) umfassen.

12. Gerät nach einem der vorherigen Ansprüche, **dadurch gekennzeichnet, dass** jeder Sensor (3) in eine Vielzahl von Teilsensoren unterteilt ist.

13. Gerät nach einem der vorherigen Ansprüche, **dadurch gekennzeichnet, dass** die Sensoren (3) / Teilsensoren über das Gehäuse (1) gemäß üblichen Kontaktprofilen bei einer normalen Benutzung angeordnet sind, insbesondere ergonomisch / ergonometrisch angeordnet sind.

14. Gerät nach einem der vorherigen Ansprüche, **dadurch gekennzeichnet, dass** es eine äußere Gehäuseform aufweist, die zumindest in Teilbereichen dem Formabdruck von einem Körperteil / Körperbereich eines Nutzer, insbesondere von dessen Hand, Fingern oder Kopf entspricht oder diesen zumindest im Wesentlichen nachbildet, wobei mehrere Sensoren (3) verteilt über das Gehäuse (1) des Gerätes in die dem Formabdruck entsprechenden oder nachgebildeten Gehäusebereiche (2a, 2b, 2c, 2d, 2e) integriert sind.

15. Verfahren zur Herstellung eines Gerätes nach einem der vorherigen Ansprüche, **dadurch gekennzeichnet, dass** von einem Körperteil / Körperbereich eines Nutzer, insbesondere von dessen Hand, Fingern oder Kopf ein Formabdruck genommen wird und in Abhängigkeit des erstellten Formabdruckes die äußere Form des Gehäuses (1) des Gerätes so hergestellt wird, dass die Gehäuseform zumindest in Teilbereichen dem Formabdruck entspricht oder diesen zumindest im Wesentlichen nachbildet, wobei mehrere Sensoren (3) verteilt über das Gehäuse (1) des Gerätes in die dem Formabdruck entsprechenden / nachbildenden Gehäusebereiche (2a, 2b, 2c, 2d, 2e) integriert werden.
